(19) **Europäisches Patentamt**
**European Patent Office**
**Office européen des brevets**

(11) **EP 4 657 108 A1**

(12) **EUROPEAN PATENT APPLICATION**

(43) Date of publication:
**03.12.2025 Bulletin 2025/49**

(21) Application number: **24305838.5**

(22) Date of filing: **28.05.2024**

(51) International Patent Classification (IPC):
***G01S 5/02*** *(2010.01)*

(52) Cooperative Patent Classification (CPC):
**G01S 5/0246; G01S 5/0249;** G01S 5/0278

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Eutelsat SA**
**92130 Issy Les Moulineaux (FR)**

(72) Inventors:
• **Collard, Florian**
**92130 ISSY LES MOULINEAUX (FR)**
• **Brichler, Geoffroy**
**92130 ISSY LES MOULINEAUX (FR)**
• **Zekri, Soufiane**
**92130 ISSY LES MOULINEAUX (FR)**
• **Dupuis, Octave**
**92130 ISSY LES MOULINEAUX (FR)**

(74) Representative: **Cabinet Camus Lebkiri**
**25 rue de Maubeuge**
**75009 Paris (FR)**

(54) **METHOD FOR LOCATING A GROUND-BASED DEVICE USING ONE LEO SATELLITE AND ASSOCIATED SYSTEM**

(57)     The invention concerns a method for locating a ground-based device (10) using only one non-geostationary satellite (20), wherein Doppler measurements are extracted from received signals, and a plurality of computing iterations are performed, each computing iteration comprising defining a new geographical window having an area different from an area of a directly preceding geographical window, simulating Doppler curves for a plurality of positions inside the defined geographical window, training a machine learning model with the simulated Doppler curves associated with their position of emission, and obtaining a location of the ground-based device (10) by inputting in the trained model the extracted Doppler measurements.

FIG. 1

**Description**

## TECHNICAL FIELD

The technical field of the invention is the field of ground-based device geolocation by satellite.

The present document concerns a method for locating a ground-based device using only one non-geostationary satellite, and particularly wherein the non-geostationary satellite is a low earth orbit ("LEO") satellite.

## STATE OF THE ART

With the development of Internet of Things ("IoT") networks, Low Earth Orbit ("LEO") satellites constellations have been found to be of interest as they particularly well integrate with such systems. Indeed, LEO satellites allow a global coverage starting from just one satellite. LEO satellites constellations are for example used for data collection, to retrieve data from parts of IoT networks and to deliver the data to other parts of said networks.

Most of the time, these constellations are used to retrieve data from ground-based objects unable to communicate with the rest of the network due to their location, and to deliver said data to ground-based stations of the network to make the data accessible by the rest of the network. Constellations of Low Earth Orbit (LEO) satellites are thus subject to substantial developments as connecting remote users is becoming an important matter.

In IoT networks, an other important feature is to be able to locate the IoT devices. Such a feature is very useful to track the position of ships, trucks, containers, sensors or any other ground-based device. IoT devices are often resources-constrained, in particular in terms of processing, of energy and of the quality of their internal clock. Locating ground-based resources-constrained devices using LEO constellations would lead to lower associated costs and energy requirements as compared to Global Navigation Satellite Systems (GNSS), such as the Global Positioning Systems (GPS). Indeed, LEO satellites are smaller and less expensive to launch than GNSS satellites, and their closer proximity to the Earth reduces the need for complex ground infrastructure.

There is a need for a solution to locate ground-based devices using a LEO satellite and less resources as in the prior art.

## SUMMARY OF THE INVENTION

The present invention solves the above-mentioned problems by providing a solution which permits to locate a ground-based device using only one LEO satellite.

According to a first aspect of the invention, this is satisfied by providing a method for locating a ground-based device, the method being implemented by a computer, the method comprising:

- Obtaining Doppler measurements corresponding to a plurality of signals transmitted at a predetermined frequency between the ground-based device and a non-geostationary satellite orbiting a celestial body,

- Computing an estimated position of the ground-based device inside a geographical window of the celestial body, the computing comprising:

    - Simulating a plurality of Doppler curves corresponding to Doppler curves of simulated signals emitted from a plurality of positions in the geographical window,

    - Training a machine learning model with the plurality of simulated Doppler curves as input associated with the plurality of positions as output,

    - Obtaining the estimated position of the ground-based device in the initial geographical window by providing as input of the trained machine learning model the obtained Doppler measurements,

    - wherein the computing of the estimated position is performed a plurality of times as a plurality of computing iterations to obtain, after a final computing iteration of the plurality of computing iterations, a location of the ground-based device being a final refined estimated position of the ground-based device,

    - wherein a first computing iteration of the plurality of computing iterations is based on a first geographical window centered around the nadir of the non-geostationary satellite and having a first area, and

    - wherein each further computing iteration of the plurality of computing iterations is based on a new geographical window centered around a previously estimated position in a directly previous computing iteration of the plurality of computing iterations, the new geographical window having a new area different from a previous area of a geographical window of the directly previous computing iteration.

Thanks to the invention, it is possible to locate a ground-based device using only one non-geostationary satellite, with a precision of several kilometres, for example between 3 and 30 kilometres. To do so, Doppler curves are used. Indeed, this invention relies on the fact that a relationship exists between the Doppler curve of a received signal and the position of emission of said signal. The claimed invention uses this relationship to locate a ground-based device by training a machine learning model with simulated Doppler curves and associated emission positions, to obtain the position of the ground-based device having emitted or received a real signal from which a Doppler curve has been extracted. Doing this location method only once does not enable appropriate precision for the obtained position. Therefore, the method of the invention further comprises several steps of training and locating, using the same real signal and extracted Doppler curve, with a modified geographical window, each geographical window from a computing step having a different area than the other geographical windows of the other computing steps, and a modified center, the center of the new geographical window being the directly previous estimated position. This permits to estimate a position with greater precision.

It is understood by "directly previous estimated position" the position estimated at the computing iteration performed just before the current computing iteration, that is with no other computing iteration between the directly previous computing iteration and the current computing iteration.

The method according to the invention may also have one or more of the following characteristics, considered individually or according to any technically possible combinations thereof:

- one new area of a new geographical window is greater as compared to an area of a geographical window of a directly previous computing iteration, and wherein the areas of the other geographical windows of each of the other computing iterations are smaller as compared to the area of the geographical window of their directly previous computing iteration. This one greater area during a computing iteration with only smaller areas during the other computing iterations has been found by the inventors to greatly increase the precision of the obtained position, to obtain a precision of around 1 kilometer.

- the plurality of signals is emitted by the ground-based device and received by the non-geostationary satellite, and the method is implemented by the non-geostationary satellite.

- the plurality of signals is emitted by the ground-based device and received by the non-geostationary satellite, and the method is implemented by a ground-based station.

- the plurality of signals is emitted by the non-geostationary satellite and received by the ground-based device, and the method is implemented by the ground-based device.

- the method comprises between 5 and 20 computing iterations. This permits a good performance to computing ratio, to obtain a position with appropriate precision in a limited amount of time.

- simulating the plurality of Doppler curves comprises adding a modelisation of a signal impairment of satellite signal transmissions such as noise to the simulated Doppler curves. This permits to simulate Doppler curves as close as possible to the extracted Doppler curve of the received signal and therefore to train the machine learning model with more realistic Doppler curves.

- at each computing iteration, Doppler curves are simulated for between 20 and 50 positions in the geographical window. This permits a good performance to computing ratio, to obtain a position with appropriate precision in a limited amount of time.

- the machine learning model is a non-linear regression.

- for a first part of the plurality of computing iterations the machine learning model is a non-linear regression, and for a second part of the plurality of computing iterations the machine learning model is a linear regression. This permits to improve the precision of the obtained position.

- the method comprises 11 iterations, wherein the first 8 computing iterations use a non-linear regression model as the machine learning model and wherein the last 3 computing iterations use a linear regression model as the machine learning model. This permits to improve the precision of the obtained position.

- each area of each geographical window is computed by applying a multiplication factor on the area of the geographical window of the directly previous computing iteration, the first computing iteration has a predetermined area and the multiplication factor of each of the next 10 computing iterations is, in order, as follows: 0.3, 0.5, 0.5, 0.5, 3, 0.2, 0.5, 0.5, 0.5, 0.5. This sequence of reduction factors has been found by the inventors to improve the precision of the obtained position.

- the non-linear regression is a support-vector regression using a Radial Basis Function kernel. This permits to improve the precision of the obtained position.

- the plurality of signals have been sent by the ground-based device at different timestamps during a time window in which the non-geostationary satellite is in visibility of the ground-based device,

- the method is performed a plurality of times to obtain a plurality of estimated positions of the ground-based device, the location of the ground-based device being a mean of the plurality of estimated positions.

Another aspect of the invention relates to a system comprising a ground-based device, a non-geostationary satellite and a computer configured to implement the method according to any one of the preceding claims for locating the ground-based device.

In an embodiment of the system according to the invention, the computer is embedded in the non-geostationary satellite.

In another embodiment of the system according to the invention, the computer is embedded in the ground-based device.

In another embodiment of the system according to the invention, the computer is embedded in a ground-based station.

Another aspect of the invention relates to a computer program product comprising instructions which, when the program is executed by a computer, cause the computer to carry out the method according to the invention.

Another aspect of the invention relates to a computer-readable medium having stored thereon the computer program product of the invention.

The invention finds a particular interest in IoT networks, to locate ground-based objects with constrained resources and in particular with no GPS chip.

## BRIEF DESCRIPTION OF THE FIGURES

Other characteristics and advantages of the invention will become clear from the description that is given thereof below, by way of indication and in no way limiting, with reference to the appended figures, among which:

- Figure 1 is a schematic representation of a system configured to implement a method according to the invention,

- Figure 2 is a schematic representation of a method according to the invention,

- Figure 3 is a schematic representation of a step of the method according to the invention,

- Figure 4 is a schematic representation of a geographical window in the method according to the invention,

- Figure 5 is a schematic representation of obtaining positions in a geographical window in the method according to the invention,

- Figure 6 is a schematic representation of another embodiment for obtaining positions in a geographical window in the method according to the invention,

- Figure 7 is a schematic representation of a new geographical window in the method according to the invention,

- Figure 8 is a schematic representation of another step of the method according to the invention.

## DETAILED DESCRIPTION

For greater clarity, identical or similar elements are marked by identical reference signs in all of the figures.

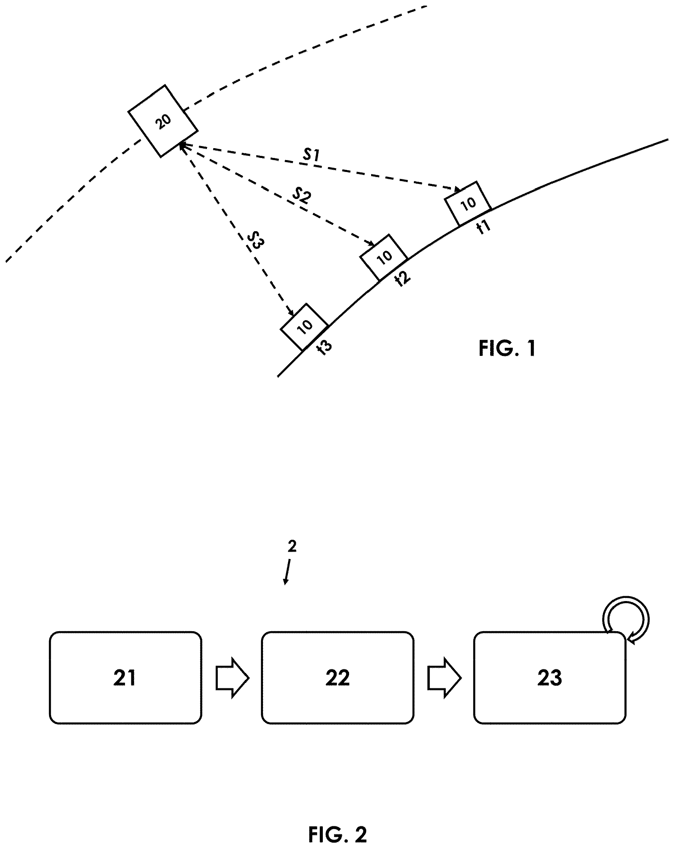

The invention is a method to locate a ground-based device such as the ground-based device 10 represented in Figure 1, using a signal transmitted between the ground-based device 10 and a non-geostationary satellite such as the satellite 20 represented in Figure 1.

Figure 1 is a schematic representation of an embodiment of a system according to the invention, the system comprising the ground-based device 10 and the non-geostationary satellite 20.

The non-geostationary satellite 20 is a satellite orbiting a celestial body such as the Earth. When the non-geostationary satellite 20 orbits the Earth, it can then be a low Earth orbit satellite (with an orbit altitude below 2000 km) or a medium Earth orbit satellite (with an orbit altitude above 2000 km and below geosynchronous orbit). The non-geostationary satellite 20 comprises at least a processor and a memory, the memory storing instructions which, when executed by the processor, cause the processor to carry out the actions assigned to it later. The non-geostationary satellite 20 further comprises at least one communication payload, the communication payload comprising at least one transponder configured to receive and send signals towards the celestial body.

The ground-based device 10 is a device comprising at least a processor and a memory, the memory storing instructions which, when executed by the processor, cause the processor to carry out the actions assigned to it later. Preferably, the ground-based device 10 is a mobile device, meaning that the device is able to be moved for example by having a low weight or by comprising means making it able to be moved. Preferably, the ground-based device 10 is a resource-constrained device. It is understood by a resource-constrained device a device comprising a limited processor and/or limited memory such as a low-cost processor and/or a low-cost memory or such as an Internet of Things device, able to connect to an IoT network such as a Sigfox® network, a Lora® network or any other network permitting to link IoT devices. Further, the ground-based device comprises at least a communication module configured to communicate, that is to send and receive signals, at least with the non-geostationary satellite 20.

Further, the communication module of the ground-based device 10 can be configured to communicate through a ground-based IoT network or through any other network, via wired means or wirelessly, for example towards a ground-based station 30. To communicate through a ground-based IoT network or through any other network, via wired means or wirelessly, for example towards a ground-based station 30, the ground-based device 10 can comprise another communication module. In the example represented at Figure 1, the ground-based device 10, preferably resource-constrained, is able to reach the non-geostationary satellite 20 by sending signals at a predetermined frequency.

Figure 2 represents a method 2 according to the invention, the method 2 being a location method. The location method 2 permits to locate the ground-based device.

The method 2 is implemented by a computer. By "implemented by a computer" it is understood that the computer comprises a memory and a processor, wherein the memory is configured to store instructions which, when executed by the processor, cause the processor to carry out the steps of the method 2.

In a preferred embodiment of the invention the method is implemented by a computer comprised in a ground-based station on Earth. The information needed to obtain the position is therefore transmitted to said ground-based station, as will be described later. This method is preferred as it requires no modification of the current payloads of the existing non-geostationary satellites, as the computational power is needed on the ground. It is also preferred because it is easier and cheaper to have access to greater computational power on the ground than onboard a satellite.

In a second embodiment of the invention, the computer implementing the method is embedded in the non-geostationary satellite 20, i.e. the non-geostationary satellite 20 comprises the computer, and the computer is used to implement the method 2. This method is not preferred as it requires to modify the current payloads of the existing non-geostationary satellites to expand their computational power, and because embedded computational power is more expensive onboard a satellite as compared to on the ground. This embodiment is still interesting as it also enables to obtain a position of the ground-based device using only one non-geostationary satellite, with a good precision.

In a third embodiment of the invention, the computer implementing the method is embedded in the ground-based device 10, i.e. the ground-based device 10 comprises the computer, and the computer is used to implement the method 2. In this embodiment, the ground-based device 10 receives the signals from the non-geostationary satellite 20, for example by exploiting a beacon signal periodically emitted towards the celestial body orbited by the satellite 20. This method is interesting as it enables a ground-based device 10 to obtain its own location, even without an expensive and energy-consuming GPS chip. If the ground-based device 10 comprises a GPS chip, this method enables the ground-based device 10 to obtain its own location even in case of GPS jamming or GPS interference. This method is not preferred as it requires to modify the current payloads of the existing ground-based devices to expand their computational power, and most ground-based devices are resources-constrained. This embodiment is still interesting as it also enables to obtain a position of the ground-based device using only one non-geostationary satellite, with a good precision.

The method 2 comprises a first step 21 of obtaining Doppler measurements. Obtaining the Doppler measurements is performed by receiving, acquiring, or extracting the Doppler measurements. In the preferred embodiment, where the ground-based station implements the method 2, the ground-based station receives the Doppler measurements extracted by the non-geostationary satellite, or a plurality of signals and performs the extraction of the Doppler measurements from the plurality of signals. Alternatively, the ground-based station acquires the Doppler measurements from a server storing the Doppler measurements. In the other embodiments, where the non-geostationary satellite or the ground-based device 10 implements the method 2, the non-geostationary satellite or the ground-based device 10 extracts the Doppler measurements from a plurality of received signals.

To obtain Doppler measurements, it is necessary for the computer implementing the method to receive a plurality of signals emitted at a predetermined frequency. The signals are transmitted between the non-geostationary satellite 20 orbiting a celestial body and the ground-based device 10 being on the celestial body when in visibility. As shown in Figure 1, an example of three signals S1 to S3 are sent at different timestamps respectively t1 to t3, by one of the ground-based device 10 or the non-geostationary satellite 20 depending on the embodiment, during a time window in which the ground-based device 10 and the non-geostationary satellite 20 are in visibility, that is during only one pass of the non-geostationary satellite 20 above the ground-based device 10. These three signals can each comprise a data sequence and Doppler measurements are extracted from the plurality of signals received.

To do so, for each signal, a Doppler estimation of the received signal is performed. This Doppler estimation is performed onboard the non-geostationary satellite 20, by the non-geostationary satellite 20 or onboard the ground-based device 10, by the ground-based device 10 or by the ground-based station, depending on the embodiment. The entity receiving the signals performs a Doppler shift estimation based on the frequency of the received signal. Such a Doppler shift, for example in Hz, is retrieved by computing the difference between a received frequency of a continuous wave emitted in the signal, and the expected frequency at emission of the continuous wave by the entity having emitted the signals (the ground-based device 10 or the non-geostationary satellite 20). The expected frequency is a predetermined frequency, for example known by both the non-geostationary satellite 20 and the ground-based device 10 from factory parameters, or because the non-geostationary satellite 20 sent an information of a frequency to use to the ground-based device 10, for example using a beacon signal.

Once the plurality of Doppler shifts corresponding respectively to the plurality of signals received have been estimated, a plurality of Doppler measurements is obtained, each Doppler shift being a Doppler measurement. The Doppler measurements can be obtained for between 2 and 10 signals received, meaning that between 2 and 10 Doppler measurements are obtained Preferably, 5 signals received are enough to obtain a resulting location with sufficient precision and not too many to overload the communications between the non-geostationary satellite 20 and the ground-based station 10.

Once the Doppler measurements have been obtained, a first estimation of the position of the ground-based device is computed at a step 22.

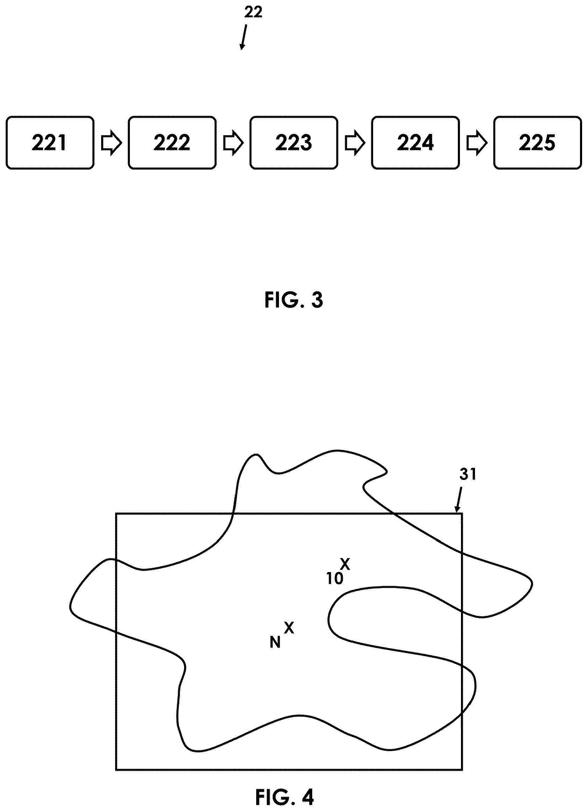

The step 22 is divided into several sub-steps 221 to 225, represented in Figure 3.

First, in a sub-step 221, a geographical window encompassing the ground-based device 10 on the celestial body is defined. Such a geographical window is represented in Figure 4. This initial geographical window 31 encompasses the ground-based device 10 as said initial geographical window is large enough to comprise the ground-based device 10. To make sure of this, the geographical window 31 is defined as having the nadir N of the non-geostationary satellite 20 as its center when receiving a signal from the ground-based device 10, thus making sure that the ground-based device is in an area around the nadir N of the non-geostationary satellite 20. The geographical window preferably is centered around the nadir N of the satellite 20 at a predetermined time, that is for example at a time instant when the Doppler effect is null, that is at the elevation peak of the pass of the satellite 20. The predetermined time instant can also be the average time instant between the time of the first measurement and the time of the last measurement of the signals received to obtain the Doppler measurements. This area is large enough to encompass the ground-based device 10, for example around 2000 kilometers by 1000 kilometers, as shown in Figure 4. The initial geographical window can have sides wherein each side has a length comprised between 800 and 3000 kilometers. The initial geographical window can take any shape, a rectangular shape being a preferred, as it is an easier shape to work and compute with.

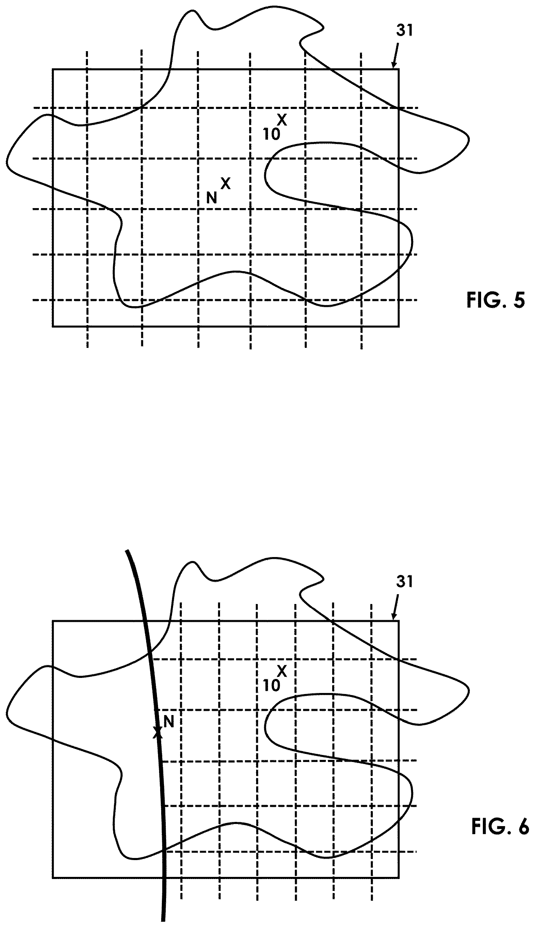

In a sub-step 222, the geographical window 31 is then divided into several positions. The invention encompasses any way to obtain several positions inside the geographical window 31. In a preferred embodiment, the geographical window is meshed, as shown in Figure 5, to obtain the number of positions needed. The advantage of meshing the window is that the obtained positions are regularly distributed horizontally and vertically in the whole geographical window. A geographical window is meshed by dividing the window into shapes separated by lines, preferably by straight lines. For example, the invention encompasses any number of positions, but preferably a number of positions comprised between 20 and 50 positions. Figure 5 shows a meshed geographical window 31, with 30 positions created inside the geographical window 31 by the mesh of 6 vertical straight lines and 5 horizontal straight lines. Alternatively, the positions can be distributed only on part of the geographical window, for example on a right side of the satellite pass crossing the geographical window 31, as shown in Figure 6, or on a left side of the satellite pass crossing the geographical window, as the Doppler curve onboard the satellite 20 is the same for two positions symmetrical with respect to the satellite pass. This second option of meshing only part of the geographical window 31 permits to obtain a position faster as the search window is reduced. To differentiate two symmetrical positions obtained from the process according to the invention, it is possible to tilt the beam of the satellite, or to use two antennas, each looking at a different side of the satellite, to compare the strength of the signals received. Another possibility to differentiate two symmetrical positions obtained from the process according to the invention is to perform the process for several successive passes above the device, which enables to compare the obtained positions and to keep only a position on one side of the satellite pass.

In a sub-step 223, a plurality of Doppler curves are simulated, as being emitted from the positions obtained in sub-step 222. A Doppler curve is a curve representing the Doppler shift as a function of time for a single satellite pass. Therefore, the obtained Doppler measurements correspond to points of a Doppler curve. To simulate a Doppler curve associated with a position, a Doppler curve can be computed using a mathematical formula. For example, such a mathematical formula is the following :

$$f_r = f_t - \frac{v}{c} * f_t,$$

with $f_r$ the received frequency, $f_t$ the transmitted frequency, $v$ the velocity of approach of the satellite along the satellite-device axis, and $c$ the celerity of the wave.

The simulation further preferably comprises adding noise to each Doppler curve, so that each Doppler curve is closer to a real Doppler curve than a simply computed "theoretical" Doppler curve. An example way of adding noise is by adding to the Doppler curve a normal distribution with mean zero and standard deviation corresponding to the desired noise level. The invention covers any way to add desired noise to the Doppler curve. A Doppler curve can also be obtained using a model taking account impairments encountered in real implementations (signal propagation, central frequency drift, noise etc.).

When all the Doppler curves associated with all the positions defined in sub-step 222 are obtained in sub-step 223, a step 224 of training a machine learning model is performed. The training comprises providing, as input of the model, the simulated Doppler curves of the sub-step 223 and their associated positions. The machine learning model is thus trained to receive, in input, a Doppler curve, and to provide, in output, a position of the emitter of the signals following this Doppler curve.

The trained machine learning model is preferably, initially, a non-linear regression, as it has shown the best performance in terms of precision of the obtained position. Preferably again, the machine learning model is a support-vector regression using a Radial Basis Function kernel, as it handles well noisy signals such as the one handled in the present invention. This permits to even improve the precision of the obtained position.

The step 22 then comprises a last sub-step 225, of obtaining the estimated position by entering, in input of the trained machine learning model, the Doppler measurements obtained in step 21, that is the real Doppler measurements obtained from the received signals. The trained model then outputs an estimated position based on the input Doppler measurements.

Once an initial estimated position has been obtained, a plurality of computing iterations 23 are performed. Each computing iteration 23 comprises computing a refined estimated position, by using a new geographical window centered on the position estimated during the directly previous computing iteration, with a different area as compared to the area of the directly previous geographical window.

Preferably, the computing iterations 23 are performed between 5 and 20 times. In a preferred embodiment, 11 computing iterations are performed, with one initial computing iteration 22 and 10 computing iterations 23.

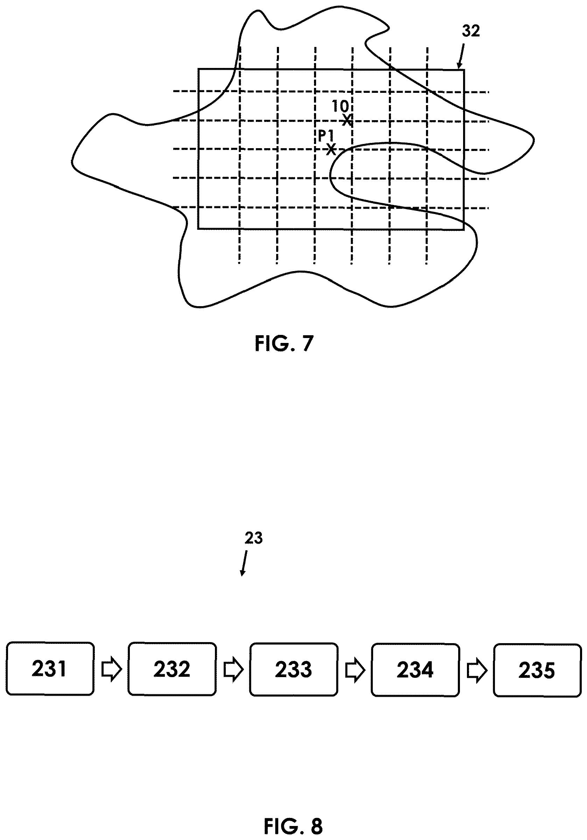

Each computing iteration 23 comprises five sub-steps 231 to 235 represented in Figure 8.

Each computing iteration 23 therefore comprises a first sub-step 231 of defining a new geographical window, which will be used in the computing iteration. The new geographical window has a different area as compared to an area of the geographical window of the directly previous computing iteration.

This is represented in Figure 7, where the new geographical window 32 is centered on the directly previous estimated position P1, and where the area of the directly previous geographical window 31 is greater than the area of the new geographical window 32.

In an embodiment, to obtain the area of the new geographical window 32, each side of the new geographical window 32 has a length corresponding to the length of the corresponding side of the directly previous geographical window 31 multiplied by a multiplication factor, for example 0.3. With the example of a multiplication factor of 0.3 and of a geographical window 31 having a side of length of 1000 kilometers, the geographical window 32 has a corresponding side of length of 300 kilometers.

The invention encompasses any other way of reducing and/or increasing the area of the directly next geographical window, such as multiplying the area by a factor, or any other means of modifying the area of the geographical window. This is particularly useful when two successive geographical windows have different shapes, and a multiplication factor can not be applied to sides of the new geographical window as the successive windows do not have corresponding sides.

Preferably, the multiplication factor is not the same across all the plurality of computing iterations 22 and 23. For example, with one initial computing iteration 22 and ten subsequent computing iterations 23, the multiplication factors can be, as applied to the area of the directly previous geographical window, in the order of the computing iterations 23 : 0.3, 0.5, 0.5, 0.5, 3, 0.2, 0.5, 0.5, 0.5, 0.5. It is to be noted that one multiplication factor is not a reduction factor but is an increase factor. This increase factor of 3 means that the area of the new geographical window is greater than the area of the directly previous geographical window, as opposed to all the other areas of the other geographical window, which all have a smaller area than the directly previous geographical window. Having one area increase for one geographical window among area decreases for all other geographical windows has shown significantly better performance as compared to using only area decreases for all geographical windows.

As the new geographical window has been defined in sub-step 231, the sub-step 232 of obtaining several positions inside the new geographical window 32 can be performed. This sub-step 232 is preferably performed the same way as the sub-step 222. For example, this can be by meshing the new geographical window 32, as shown in Figure 7, for example to obtain the same number of positions as in sub-step 222. As in sub-step 222, in sub-step 232, the positions can be obtained only on one side of the pass of the satellite.

Once a number of positions have been obtained, in a sub-step 233, a plurality of Doppler curves are simulated, as being emitted from the positions obtained in sub-step 232. This simulation is performed as in sub-step 223.

A machine learning model can then be trained in sub-step 234, using the Doppler curves simulated in sub-step 233 associated with all the positions defined in sub-step 232. The training comprises providing, as input of the model, the simulated Doppler curves of the sub-step 233 and their associated positions. The machine learning model is thus trained to receive, in input, Doppler measurements, and to provide, in output, a position of the emitter of the signals following a Doppler curve fitted to these Doppler measurements.

The trained machine learning model can be a non-linear regression, as it has shown good performance in terms of precision of the obtained position. Preferably, when the machine learning model is a non-linear regression, the machine learning model is a support-vector regression using a Radial Basis Function kernel, as it handles well noisy signals such as the one handled in the present invention. This permits to even improve the precision of the obtained position.

Preferably, the machine learning model is not the same across all the plurality of computing iterations 22 and 23. For example, with one initial computing iteration 22 and ten subsequent computing iterations 23, the machine learning model can be a support-vector regression for the initial computing iteration 22 and for the seven subsequent computing iterations 23, and a linear regression for the last four computing iterations 23. This embodiment has shown good performance in terms of precision of the obtained position.

The step 23 then comprises a last sub-step 235 of obtaining the estimated position by entering, in input of the trained machine learning model, the Doppler measurements obtained in step 21, that is the real Doppler measurements obtained from the received signals. The trained model then outputs an estimated position based on the input Doppler measurements. As the method 2 progresses through the computing iterations, the estimated position is refined, as the model is trained with positions closer to the real position of the ground-based device 10. By "the estimated position is refined" it is understood that the precision of the position gets better with the iteration, starting with a precision of several dozens or hundreds of kilometers, to get to an appropriate precision of for example 1 kilometer in the preferred embodiment.

The preferred embodiment is summarized in the following table 1:

| Number of computing iterations | 11 |
| --- | --- |
| Machine learning model | 7 SVR and 4 linear regressions |
| Number of new geographical windows | 10 |
| Multiplication factors (in order) | 0.3, 0.5, 0.5, 0.5, 3, 0.2, 0.5, 0.5, 0.5, 0.5 |
| Number of points (positions) per training | 25 |
| C (complexity parameter for the SVR) | 10000 |
| Lambda (regularization parameter for the SVR) | 0.029 |

This preferred embodiment, described in Table 1, has shown good precision of around 1 kilometer ifor the final refined estimated position obtained at the end of the last computing iteration of the eleven computing iterations.

In an embodiment, the method is performed a plurality of times to obtain a plurality of estimated positions of the ground-based device 10. From this plurality of estimated positions of the ground-based device 10, a final location of the ground-based device 10 can be obtained, for example by computing a mean position from the plurality of estimated positions.

**Claims**

1. Method (2) for locating a ground-based device (10), the method (2) being implemented by a computer, the method (2) comprising:

   - Obtaining (21) Doppler measurements corresponding to a plurality of signals transmitted at a predetermined frequency between the ground-based device (10) and a non-geostationary satellite (20) orbiting a celestial body,
   - Computing (22) an estimated position of the ground-based device (10) inside a geographical window (31) of the celestial body, the computing comprising:

     - Simulating (223) a plurality of Doppler curves corresponding to Doppler curves of simulated signals emitted from a plurality of positions in the geographical window (31),
     - Training (224) a machine learning model with the plurality of simulated Doppler curves as input associated with the plurality of positions as output,
     - Obtaining (225) the estimated position of the ground-based device (10) in the initial geographical window by providing as input of the trained machine learning model the obtained Doppler measurements,

       wherein the computing (22) of the estimated position is performed a plurality of times as a plurality of computing iterations to obtain, after a final computing iteration of the plurality of computing iterations, a location of the ground-based device (10) being a final refined estimated position of the ground-based device (10),
       wherein a first computing iteration of the plurality of computing iterations is based on a first geographical window (31) centered around the nadir (N) of the non-geostationary satellite (20) and having a first area, and
       wherein each further computing iteration of the plurality of computing iterations is based on a new geographical window (32) centered around a previously estimated position (P1) in a directly previous computing iteration of the plurality of computing iterations, the new geographical window (32) having a new area different from a previous area of a geographical window of the directly previous computing iteration.

2. Method (2) according to claim 1 wherein one new area of a new geographical window (32) is greater as compared to an area of a geographical window of a directly previous computing iteration, and wherein the areas of the other geographical windows of each of the other computing iterations are smaller as compared to the area of the geographical window of their directly previous computing iteration.

3. Method (2) according to any one of the preceding claims comprising between 5 and 20 computing iterations.

4. Method (2) according to any one of the preceding claims wherein simulating (223) the plurality of Doppler curves comprises adding a modelisation of a signal impairment of satellite signal transmissions to the simulated Doppler curves.

5. Method (2) according to any one of the preceding claims wherein, at each computing iteration, Doppler curves are simulated (223) for between 20 and 50 positions in the geographical window.

6. Method (2) according to any one of the preceding claims wherein the machine learning model is a non-linear regression.

7. Method (2) according to any one of the claims 1 to 5 wherein, for a first part of the plurality of computing iterations the machine learning model is a non-linear regression, and for a second part of the plurality of computing iterations the machine learning model is a linear regression.

8. Method (2) according to claims 3 and 7 comprising 11 iterations, wherein the first 7 computing iterations use a non-linear regression model as the machine learning model and wherein the last 4 computing iterations use a linear regression model as the machine learning model.

9. Method (2) according to the claims 2 and 8 wherein each area of each geographical window is computed by applying a multiplication factor on the area of the geographical window of the directly previous computing iteration, wherein the first computing iteration has a predetermined area and wherein the multiplication factor of each of the next 10 computing iterations is, in order, as follows: 0.3, 0.5, 0.5, 0.5, 3, 0.2, 0.5, 0.5, 0.5, 0.5.

10. Method (2) according to any one of the preceding claims wherein the plurality of signals have been sent by the ground-based device (10) at different timestamps during a time window in which the non-geostationary satellite (20) is in visibility of the ground-based device (10).

11. Method (2) according to any one of the preceding claims wherein the method (2) is performed a plurality of times to obtain a plurality of estimated positions of the ground-based device (10), the location of the ground-based device (10) being a mean of the plurality of estimated positions.

12. System comprising a ground-based device (10), a non-geostationary satellite (20) and a computer configured to implement the method (2) according to any one of the preceding claims for locating the ground-based device (10).

13. System according to claim 12 wherein the computer is embedded in the non-geostationary satellite (20).

14. A computer program product comprising instructions which, when the program is executed by a computer, cause the computer to carry out the method (2) according to any one of claims 1 to 11.

15. A computer-readable medium having stored thereon the computer program product of claim 14.

FIG. 1

2

21 → 22 → 23

FIG. 2

22

| 221 | ⇨ | 222 | ⇨ | 223 | ⇨ | 224 | ⇨ | 225 |

**FIG. 3**

31

$N^X$

$10^X$

**FIG. 4**

FIG. 5

FIG. 6

FIG. 7

FIG. 8

Application Number

EP 24 30 5838

**EUROPEAN SEARCH REPORT**

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 846 359 A1 (THALES SA [FR]) 7 July 2021 (2021-07-07) * the whole document * | 1-15 | INV. G01S5/02 |
| X | US 2020/064434 A1 (O`SHEA TIMOTHY JAMES [US] ET AL) 27 February 2020 (2020-02-27) * paragraph [0042] - paragraph [0053] * * paragraph [0071] - paragraph [0109] * * claims 1-24 * * figures 1-6 * * abstract * | 1-15 | |
| A | WO 98/02762 A2 (EAGLE EYE TECHNOLOGIES INC [US]) 22 January 1998 (1998-01-22) * the whole document * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 20 November 2024 | Galmiche, Aurélien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5838

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2024

| Patent document cited in search report | | Publication date | Patent family member(s) | | Publication date |
|---|---|---|---|---|---|
| EP 3846359 | A1 | 07-07-2021 | EP | 3846359 A1 | 07-07-2021 |
| | | | FR | 3105837 A1 | 02-07-2021 |
| US 2020064434 | A1 | 27-02-2020 | CA | 3067545 A1 | 03-01-2019 |
| | | | EP | 3646647 A1 | 06-05-2020 |
| | | | EP | 4138470 A1 | 22-02-2023 |
| | | | US | 2019004144 A1 | 03-01-2019 |
| | | | US | 2020064434 A1 | 27-02-2020 |
| | | | US | 2021190896 A1 | 24-06-2021 |
| | | | WO | 2019005436 A1 | 03-01-2019 |
| WO 9802762 | A2 | 22-01-1998 | AU | 4643997 A | 09-02-1998 |
| | | | CN | 1238868 A | 15-12-1999 |
| | | | EP | 0908022 A2 | 14-04-1999 |
| | | | WO | 9802762 A2 | 22-01-1998 |

EPO FORM P0459

For more details about this annex : see Official Journal of the European Patent Office, No. 12/82